# EUROPEAN PATENT SPECIFICATION

(11) **EP 1 717 139 B1**
(45) Date of publication and mention of the grant of the patent: **18.02.2009**
(21) Application number: 05009227.9
(22) Date of filing: 27.04.2005
(51) Int. Cl.: B62K 9/02, B62K 13/00

(54) **Combination vehicle frame**
Kombination Fahrzeug Rahmen
Combinaison véhicule cadre

(43) Date of publication of application: 02.11.2006
(73) Proprietor: J.D Components Co., Ltd., Shou Shui Hsiang, Chang Hua Hsien (TW)
(72) Inventor: Chan, Kun-Do, Annan District Tainan City 709 (TW)
(74) Representative: Becker Kurig Straus

(56) References cited:
- WO-A-20/04067352
- DE-C- 426 912
- GB-A- 2 161 120
- US-A- 2 937 035

## Description

### BACKGROUND OF THE INVENTION

### 1. Field of the Invention

The present invention relates to vehicle frame and more particularly, to a combination vehicle frame.

### 2. Description of the Related Art

Various vehicles such as tricycles, bicycles, kick scooters, and etc. are commercially available for use as transportable vehicle means and/or sports means. A baby tricycle is a small vehicle for propelling by a child sitting on it. A kick scooter is a wheeled device that is movable on the floor when the user stands with one leg on it and kicks with the other leg against the floor.

The aforesaid various vehicles (carriers) are designed for different purposes. Consumers may have to spend a lot of money to purchase different vehicles (carriers) for different purposes. Further, these conventional vehicles (carriers) are commonly well assembled in factory for ready use, not allow the consumers to enjoy the function of do-it-yourself.

A demountable infant's carriage, wherein the parts of which may be arranged so as to yield a bicycle is disclosed in DE-C-426912. Said combination frame comprising a rear wheel frame unit, a front wheel frame unit and a base frame unit is based on two crosswise center portions to which further frame rods are linked through threads.

### SUMMARY OF THE INVENTION

The present invention has been accomplished under the circumstances in view. It is the main object of the present invention to provide a combination vehicle frame, which allow the user to change the structure subject to different requirements and, enables the user to enjoy the fun of assemble the combination vehicle frame by oneself.

To achieve this object of the present invention, the combination vehicle frame comprises a base frame unit formed of a plurality of frame bars detachably connected to one another. One of the frame bars is provided with or connected to a head having a first through hole and a second through hole intersecting the first through hole. A rear wheel frame unit is detachably connected to the base frame unit remote from the head. A front wheel franie unit is selectively inserted through one of the first through hole and second through hole of the base frame unit.

Said frame bars comprise a first frame bar and a second frame bar, wherein the combination vehicle frame is characterised in that said first frame bar comprises at least one locating hole and a plurality of locating grooves inside said at least one locating hole, and that said second frame bar comprises at least one plug rod respectively inserted into the at least one locating hole of said first frame bar and a plurality of teeth arranged at said at least one plug rod for engaging the locating grooves of said first frame bar.

### BRIEF DESCRIPTION OF THE DRAWINGS

FIG. 1 is a perspective view of a combination vehicle frame for tricycle according to the present invention.
FIG. 2 is an exploded view of the combination vehicle frame according to the present invention.
FIG. 3 is another exploded view of the combination vehicle frame according to the present invention.
FIG. 4 is a front view of the combination vehicle frame according to the present invention.
FIG. 5 is a top view of the combination vehicle frame according to the present invention.
FIG. 6 is a side view of an alternate form of the present invention, showing the combination vehicle frame is assembled as a kick scooter.

### DETAILED DESCRIPTION OF THE INVENTION

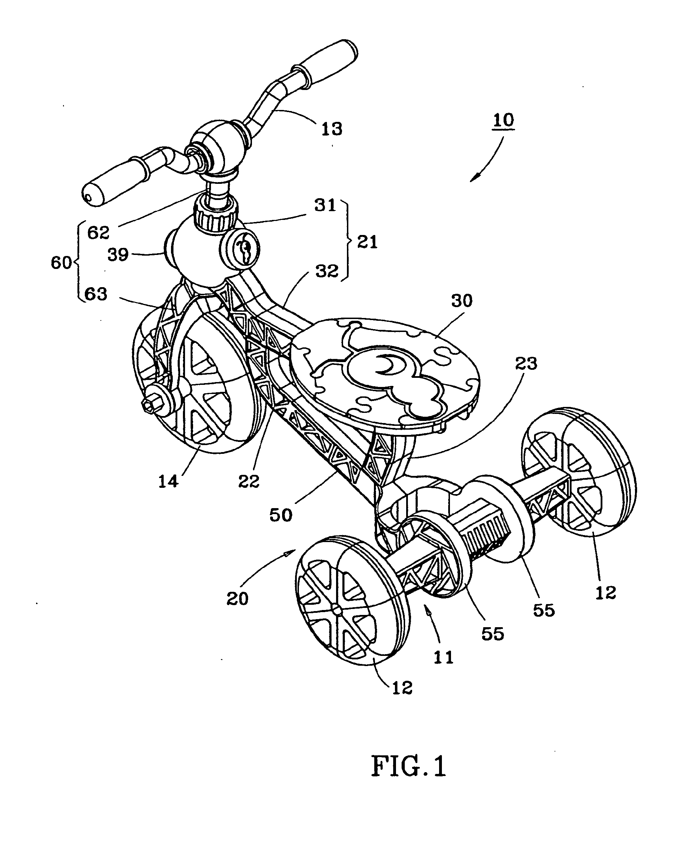

Referring to FIGS. 1-4, a combination vehicle frame **10** is assembled as a tricycle, comprising a base frame unit **20,** a rear wheel frame unit **50,** and a front wheel frame unit **60.**

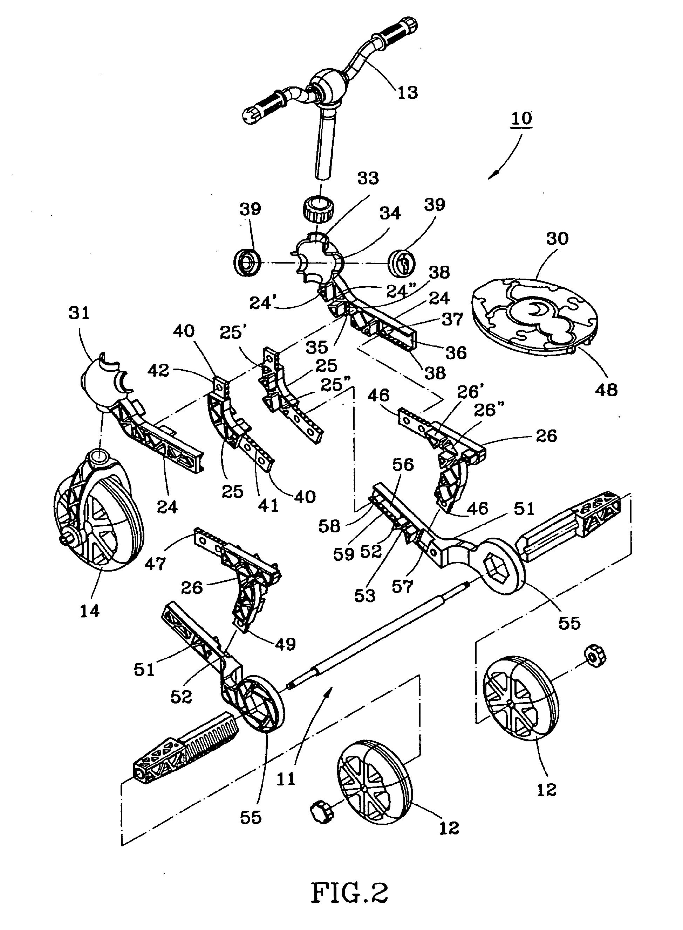

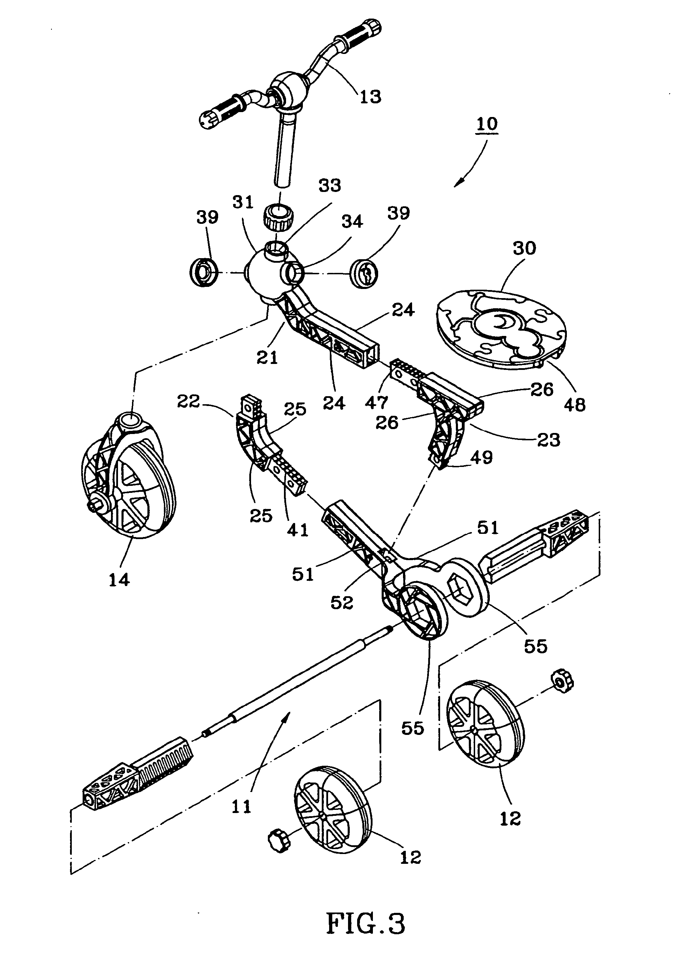

As shown in FIGS. 2 and 3, the base frame unit **20** comprises a first frame bar **21,** a second frame bar **22,** a third frame bar **23,** and a seat frame **30.** The first frame bar **21** is comprised of two symmetrical half shells **24.** The second frame bar **22** is comprised of two symmetrical half shells **25.** The third frame bar **23** is comprised of two symmetrical half shells **26.** The half shells **24-26** of the frame bars **21-23** each have a plurality of triangular plug rods **24'-26'** and triangular plug holes **24"-26".** By means of engaging respective triangular plug rods **24'-26'** into respective triangular plug holes **24"-26",** the respective half shells **24-26** of the frame bars **21-23** are respective fastened together.

The first frame bar **21** has a spherical head **31** and a support body **32** extending from the spherical head **31.** The spherical head **31** has a first through hole **33** and a second through hole **34.** The through holes **33, 34** intersect each other, and define with the longitudinal axis of the support body **32** a respective contained angle. The support body **32** has a front locating hole **35,** a rear locating hole **36,** two locating rods **37** respectively disposed inside the front locating hole **35** and the rear locating hole **36** (the locating rod in the front locating hole **35** is not shown), and a series of locating grooves **38, 38'** respectively disposed inside the locating holes **35, 36.** Two caps **39** are installed in the spherical head **31** to selectively close the two ends of the first through hole 33 or second through hole **34.**

The second frame bar 22 is smoothly arched, having two flat plug rods **40, 40'** respectively extended from the front and rear sides thereof. The flat plug rods **40, 40'** each have a series of teeth **41, 41'** and at least one through hole **42, 42'.** The third frame bar **23** has a straight portion **43,** a curved portion **45** formed integral and extending from the rear side of the straight portion **43,** and two flat plug rods **46, 46'** respectively extending from the front side of the straight portion **43** and the rear (bottom) side of the curved portion **43.** The flat plug rods **46, 46'** each have a series of teeth **47, 47'** and at least one through hole **49, 49'.** The seat frame **30** is an oval plate frame, having a bottom mounting groove **48.**

The rear wheel frame unit **50** is comprised of two symmetrical half shells **51.** The half shells **51** each have a plurality of triangular plug rods **52** and triangular plug holes **53.** By plugging the respective plug rods **52** of one of the half shells **51** into the respective plug holes **53** of the other of the half shells **51,** the two half shells **51** are fastened together. The rear wheel frame unit **50** has a front extension portion **54** forwardly extending from the front side thereof, two rear coupling rings **55** arranged in parallel at the rear side thereof, a first locating hole **56** and a second locating hole **57** respectively formed in the front extension portion **54,** two locating rods **58, 58'** respectively disposed in the locating holes **56, 57,** and series of locating grooves **59, 59'** respectively disposed inside the locating holes **56, 57.** Further, a wheel axle assembly **11** is fastened to the two rear coupling rings **55** of the rear wheel frame unit **50** to support two rear wheels **12** at the two ends thereof.

The front wheel frame unit **60** comprises a head tube **61,** which holds a handlebar **13,** and a front fork **63,** which supports a front wheel **14** at the bottom side of the head tube **61.** The head tube **61** is selectively insertable through the first through hole **23** or second through hole **24** of the spherical head **31** of the first frame bar **21** of the base frame unit **20.**

The assembly process of the combination vehicle frame **10** is outlined hereinafter with reference to FIGS. 2-4 again. The front flat plug rod **40** of the second frame bar **22** is inserted into the front locating hole **35** of the first frame bar **21** to couple the through hole **42** of the front flat plug rod **40** to the locating rod (not shown) in the front locating hole **35** and to force the teeth **41** into engagement with the locating grooves **38,** and then the plug rod **46** of the straight portion **43** of the third frame bar **23** is inserted into the rear locating hole **36** of the first frame bar **21** to couple the through hole **49** of the plug rod **46** to the locating rod **37** in the rear locating hole **36** and to force the teeth **47** into engagement with the locating grooves **38',** and then the seat 30 is fastened to the third frame bar **23** by forcing the mounting groove **48** into engagement with the straight portion **43** of the third frame bar **23.** Therefore, the first frame bar **21,** the second frame bar **22,** the third frame bar **23** and the seat **30** are detachably fastened together.

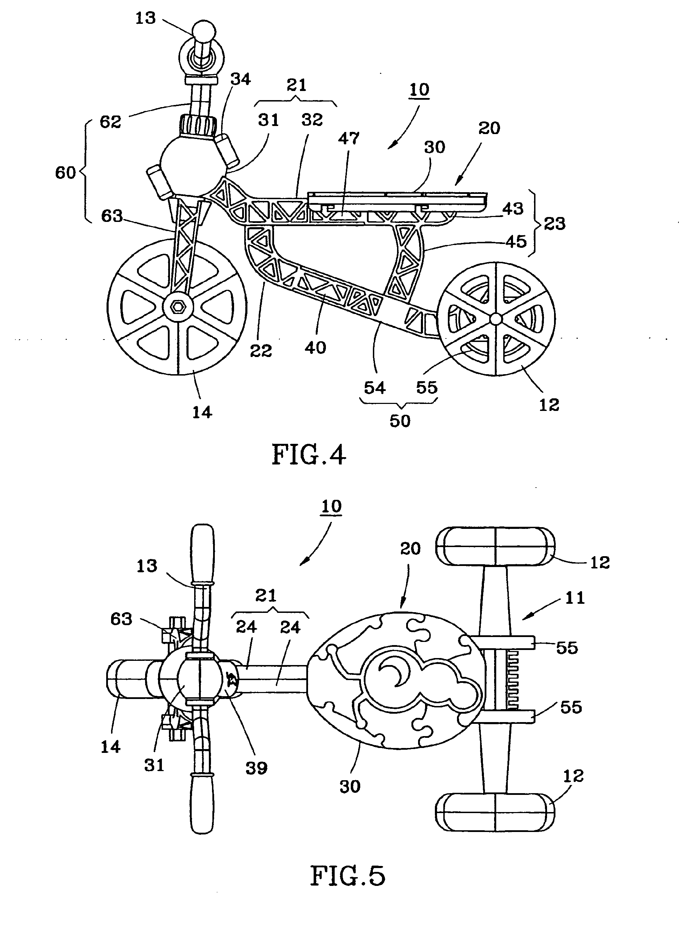

Thereafter, the first locating hole **56** and second locating hole **57** of the rear wheel frame unit **50** are respectively coupled to the rear flat plug rod **40'** of the second frame bar **22** and the plug rod **46'** of the curved portion **45** of the third frame bar **23** to have the locating rods **58, 58'** be respectively inserted into the through holes **42', 49'** of the plug rods **40', 46'** and the teeth **41', 47'** be respectively maintained in engagement with the locating grooves **59, 59',** and therefore the rear wheel frame unit **50** is detachably fastened to the base frame unit **20.** Thereafter, the head tube **62** of the front wheel frame unit **60** is inserted through the first through hole **33** of the spherical head **31** and suspended in vertical, and the two caps **39** are respectively fastened to the two ends of the second through hole **34,** keeping the front wheel **14** suspended below the spherical head **31.** At this time, the support body **32** of the first frame bar **21** is kept in parallel to and spaced above the floor at a distance, and the seat **30** is supported on the base frame unit **20** above the elevation of the rear wheels **12.** Therefore, as shown in FIGS. 4 and 5, the front wheel frame unit **60,** the base frame unit **20** and the rear wheel frame unit **50** are joined together, forming a tricycle frame.

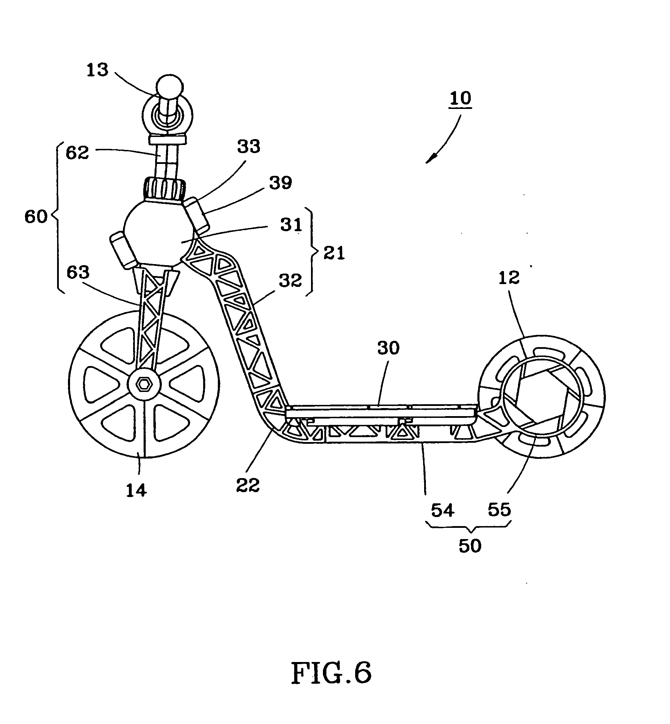

FIG. 6 shows an alternate form of the present invention. According to this embodiment, the combination vehicle frame **10** is made in the form of a kick scooter, comprising a base frame unit **20,** a front wheel frame unit **50,** and a rear wheel frame unit **60.** As illustrated, the base frame unit **20** of the combination vehicle frame **10** is comprised of a first frame bar **21,** a second frame bar **22,** and a seat **30.** The first frame bar **21** has a support body **32** and a spherical head **31** provided at the front side of the support body **32.** The spherical head **31** has a first through hole **33** and a second through hole **34.** The second frame bar **22** is connected to the rear side of the support body **32** of the first frame bar **21.** The rear wheel frame unit **50** has a front extension portion **54** horizontally forwardly extending from the front side thereof and connected to the second frame bar **22,** and two rear coupling rings **55** arranged in parallel at the rear side thereof and coupled to a rear wheel **12** at two sides. The seat **30** is coupled to the front extension portion **54** of the rear wheel frame unit **50** at the top side. The front wheel frame unit **60** is inserted through the second through hole **34** of the spherical head **31.** Two caps **39** are fastened to the two ends of the first through hole **33.** The front wheel frame unit **60** supports a front wheel **14** below the spherical head **31.** The front wheel **14** and the rear wheel **12** support the combination vehicle frame **10** on the floor. The second through hole **34** extends in vertical direction perpendicular to the floor. The support body **32** extends obliquely downwardly from the spherical head **31** toward the floor.

Although particular embodiments of the present invention have been described in detail for purposes of illustration, various modifications and enhancements may be made without departing from the scope of the invention. For example, the spherical head and support body of the first frame bar may can be independent members detachably fastened together; the seat may be formed integral with one frame bar of the base frame unit. Accordingly, the invention is not to be limited except as by the appended claims.

## Claims

1. A combination vehicle frame (10) comprising:
a base frame unit (20) formed of a plurality of frame bars (21, 22, 23) detachably connected to one another, one of said frame bars being provided with or connected to a head (31) having a first through hole (33) and a second through hole (34) intersecting said first through hole (33);
a rear wheel frame unit (50) detachably connected to said base frame unit (20); and
a front wheel frame unit (60) selectively inserted through one of said first through hole (33) and said second through hole (34) of said head (31),
wherein said frame bars comprise a first frame bar (21) and a second frame bar (22),
**characterised in that** said first frame bar (21) comprises at least one locating hole (35, 36) and a plurality of locating grooves (38, 38') inside said at least one locating hole (35, 36), and said second frame bar (22) comprises at least one plug rod (40, 40') respectively inserted into the at least one locating hole (35, 36) of said first frame bar (21) and a plurality of teeth (41, 41') arranged at said at least one plug rod (40, 40') for engaging the locating grooves (38, 38') of said first frame bar (21).

2. The combination vehicle frame (10) as claimed in claim 1, wherein said first frame bar (21) further comprises at least one locating rod (37) respectively disposed in each said locating hole (35, 36); said second frame bar (22) comprises at least one through hole (42, 42') cut through each said plug rod (40, 40') for receiving the at least one locating rod (37) in each said locating hole (35, 36) of said first frame bar (21).

3. The combination vehicle frame (10) as claimed in claim 1, wherein said frame bars (21, 22, 23) of said base frame unit (20) each are comprised of two symmetrical half shells (24, 25, 26) abutted against each other, said two symmetrical half shells (24, 25, 26) each comprising a plurality of plug rods (24', 25', 26') and a plurality of plug holes (24", 25", 26"), the plug rods (24', 25', 26') of one of said two symmetrical half shells (24, 25, 26) being respectively fastened to the plug holes (24", 25", 26") of the other of said two symmetrical half shells (24, 25, 26).

4. The combination vehicle frame (10) as claimed in claim 1, wherein said frame bars comprise a first frame bar (21), a second frame bar (22), and a third frame bar (23), said first frame bar (21) having said head (31) at a front side thereof, said second frame bar (22) having a front side connected to said first frame bar (21) and a rear side connected to said rear wheel frame unit (50), said third frame bar (23) being connected between said first frame bar (21) and said rear wheel frame unit (50) to support said first frame bar (21) above said second frame bar (22).

5. The combination vehicle frame (10) as claimed in claim 1, wherein said frame bars comprise a first frame bar (21) and a second frame bar (22), said first frame bar (21) having a front side, a rear side, and said head (31) at the front side thereof, said second frame bar (22) having a front side connected to the rear side of said first frame bar (21) and a rear side connected to said rear wheel frame unit (50); said rear wheel frame unit (50) has a front extension portion (54) connected to the rear side of said second frame bar (22) and kept close and in parallel to the floor.

6. The combination vehicle frame (10) as claimed in claim 1, further comprising a seat (30) provided at a top side of said base frame unit (20) for carrying a person.

7. The combination vehicle frame (10) as claimed in claim 6, wherein said seat (30) is detachably coupled to said base frame unit (20).

8. The combination vehicle frame (10) as claimed in claim 6, wherein said seat (30) is formed integral with a part of said base frame unit (20).

9. The combination vehicle frame (10) as claimed in claim 1, wherein said base frame unit (20) further comprises two caps (39) for selectively closing two distal ends of one of said first through hole (33) and said second through hole (34) of said head (31).

## Patentansprüche

1. Kombinationsfahrzeugrahmen (10), umfassend:
eine Basisrahmeneinheit (20), die aus mehreren Rahmenstangen (21, 22, 23) gebildet ist, die lösbar miteinander verbunden sind, wobei eine der Rahmenstangen mit einem Kopf (31) bereitgestellt oder damit verbunden ist, der ein erstes Durchgangsloch (33) und ein zweites Durchgangsloch (34) aufweist, das das erste Durchgangsloch (33) kreuzt;
eine Hinterradrahmeneinheit (50), die mit der Basisrahmeneinheit (20) lösbar verbunden ist, und
eine Vorderradrahmeneinheit (60), die wahlweise durch eines von dem ersten Durchgangsloch (33) und dem zweiten Durchgangsloch (34) des Kopfes (31) eingefügt ist;
worin die Rahmenstangen eine erste Rahmenstange (21) und eine zweite Rahmenstange (22) umfassen, **dadurch gekennzeichnet, dass** die erste Rahmenstange (21) mindestens ein Aufnahmeloch (35, 36) und mehrere Lokalisierungsnuten (38, 38') in dem mindestens einen Aufnahmeloch (35, 36) umfasst, und wobei die zweite Rahmenstange (22) mindestens eine Steckstrebe (40, 40'), die entsprechend in das mindestens eine Aufnahmeloch (35, 36) der erste Rahmenstange (21) eingefügt ist, und mehrere Zähne (41, 41') umfasst, die an der mindestens einen Steckstrebe (40, 40') angeordnet sind, um mit den Lokalisierungsnuten (38, 38') der ersten Rahmenstange (21) im Eingriff zu stehen.

2. Kombinationsfahrzeugrahmen (10) nach Anspruch 1, worin die erste Rahmenstange (21) weiter mindestens eine Lokalisierungsstrebe (37) umfasst, die entsprechend in jedem der Aufnahmelöcher (35, 36) angeordnet ist, wobei die zweite Rahmenstange (22) mindestens ein Durchgangsloch (42, 42') umfasst, das durch jede der Steckstreben (40, 40') geschnitten ist, um die mindestens eine Lokalisierungsstrebe (37) in jedem der Aufnahmelöcher (35, 36) der ersten Rahmenstange (21) aufzunehmen.

3. Kombinationsfahrzeugrahmen (10) nach Anspruch 1, worin die Rahmenstangen (21, 22, 23) der Basisrahmeneinheit (20) jeweils zwei aneinandergrenzende symmetrische Halbschalen (24, 25, 26) umfassen, wobei die zwei symmetrischen Halbschalen (24, 25, 26) jeweils mehrere Steckstreben (24', 25', 26') und mehrere Stecklöcher (24", 25", 26") umfassen, wobei die Steckstreben (24', 25', 26') von einer der zwei symmetrischen Halbschalen (24, 25, 26) jeweils entsprechend an den Stecklöchern (24", 25", 26") der anderen der zwei symmetrischen Halbschalen (24, 25, 26) befestigt sind.

4. Kombinationsfahrzeugrahmen (10) nach Anspruch 1, worin die Rahmenstangen eine erste Rahmenstange (21), eine zweite Rahmenstange (22) und eine dritte Rahmenstange (23) umfassen, wobei die erste Rahmenstange (21) an einem vorderen Ende davon den Kopf (31) aufweist, wobei die zweite Rahmenstange (22) eine vordere Seite verbunden mit der ersten Rahmenstange (21) aufweist und eine hintere Seite, die mit der Hinterradrahmeneinheit (50) verbunden ist, wobei die dritte Rahmenstange (23) zwischen der ersten Rahmenstange (21) und der Hinterradrahmeneinheit (50) verbunden ist, um die erste Rahmenstange (21) über der zweiten Rahmenstange (22) zu stützen.

5. Kombinationsfahrzeugrahmen (10) nach Anspruch 1, worin die Rahmenstangen eine erste Rahmenstange (21) und eine zweite Rahmenstange (22) umfassen, wobei die erste Rahmenstange (21) eine vordere Seite, eine hintere Seite und den Kopf (31) an der vorderen Seite davon aufweist, wobei die zweite Rahmenstange (22) eine vordere Seite, die mit der hinteren Seite der ersten Rahmenstange (21) verbunden ist, und eine hintere Seite aufweist, die mit der Hinterradrahmeneinheit (50) verbunden ist, wobei die Hinterradrahmeneinheit (50) einen Erweiterungsbereich (54) aufweist, der mit der hinteren Seite der zweiten Rahmenstange (22) verbunden ist und nahe und parallel zu dem Boden gehalten wird.

6. Kombinationsfahrzeugrahmen (10) nach Anspruch 1, weiter umfassend einen Sitz (30), der an einer oberen Seite des Basisrahmens (20) zum Tragen einer Person bereitgestellt ist.

7. Kombinationsfahrzeugrahmen (10) nach Anspruch 6, worin der Sitz (30) an den Basisrahmen (20) lösbar gekoppelt ist.

8. Kombinationsfahrzeugrahmen (10) nach Anspruch 6, worin der Sitz (30) einstückig mit einem Teil des Basisrahmens (20) ausgebildet ist.

9. Kombinationsfahrzeugrahmen (10) nach Anspruch 1, worin der Basisrahmen (20) weiter zwei Kappen (39) umfasst, um wahlweise zwei distale Enden von einem von dem ersten Durchgangsloch (33) und dem zwei Durchgangsloch (34) des Kopfes (31) zu schließen.

## Revendications

1. Une combinaison d'armature de véhicule (10) comprenant :
une unité d'armature de base (20) formée d'une pluralité de barres d'armature (21, 22, 23) connectées l'une à l'autre de façon détachable, l'une desdites barres étant pourvue d'une ou connectée à une tête (31) comportant un premier trou (33) et un second trou (34) recoupant le trou (33) ;
une unité d'armature de roue arrière (50) connectée à ladite unité de base (20) de façon détachable ; et une unité d'armature de roue avant (60) insérée sélectivement à travers l'un desdits premier trou (33) et desdits second trou (34) de ladite tête (31),
dans laquelle lesdites barres d'armature comprennent une première barre d'armature (21) et une seconde barre d'armature (22),
**caractérisée en ce que** ladite première barre d'armature (21) comprend au moins un trou de repérage (35, 36) et une pluralité de rainures de repérage (38, 38') à l'intérieur dudit au moins trou de repérage (35, 36) et que la seconde barre d'armature (22) comprend au moins une barre de guidage (40, 40') respectivement insérée dans le au moins un trou de repérage (35, 36) de ladite première barre d'armature (21) et une pluralité de dents (41, 41') arrangées sur ladite au moins une barre de guidage (40, 40') pour engager lesdites rainures de repérage (38, 38') de ladite première barre d'armature (21).

2. La combinaison d'armature de véhicule (10) telle que revendiquée dans la revendication 1 dans laquelle ladite première barre d'armature (21) comprend encore au moins une barre de guidage (37) respectivement disposée dans chaque trou de repérage (35, 36), ladite seconde barre d'armature (22) comprend au moins un trou (42, 42') percé au travers de chaque barre de guidage (40, 40') pour recevoir au moins une barre de guidage (37) dans chaque trou de repérage (35, 36) de ladite barre d'armature (21).

3. La combinaison d'armature de véhicule (10) que revendiquée dans la revendication 1 dans laquelle lesdites barres d'armature (21, 22, 23) de ladite unité d'armature de base (20) sont formées chacune de deux demi coques symétriques (24, 25, 26) aboutées l'une contre l'autre, lesdites deux demi coques symétriques (24, 25, 26) comprenant chacune une pluralité de barres de guidage (24', 25', 26') et une pluralité de trous de repérage (24", 25", 26"), les barres de guidage (24', 25', 26') de l'une desdites deux demi coques symétriques (24, 25, 26) étant respectivement fixée aux trous de repérage (24", 25", 26") de l'autre desdites deux demi coques symétriques (24, 25, 26).

4. La combinaison d'armature de véhicule (10) que revendiquée dans la revendication 1 dans laquelle lesdites barres d'armature comprennent une première barre d'armature (21), une seconde barre d'armature (22) et une troisième barre d'armature (23), ladite première barre d'armature (21) comportant ladite tête (31) sur une face antérieure de celle-ci, ladite seconde barre d'armature (22) comportant une face avant connectée à ladite première barre (21) et une face arrière connectée à ladite unité d'armature de roue arrière (50), ladite troisième barre d'armature (23) étant connectée entre ladite première barre d'armature (21) et ladite unité d'armature de roue arrière (50) pour maintenir ladite première barre d'armature (21) au-dessus de la seconde barre d'armature (22).

5. La combinaison d'armature de véhicule (10) que revendiquée dans la revendication 1 dans laquelle lesdites barres d'armature comprennent une première barre d'armature (21) et une seconde barre d'armature (22), ladite première barre d'armature (21) comportant une face avant, une face arrière et ladite tête (31) à la face avant de celle-ci, ladite seconde barre d'armature (22) comportant une face avant connectée à la face arrière de ladite première barre d'armature et une face arrière connectée à ladite unité d'armature de roue arrière (50), ladite unité d'armature de roue arrière (50) comporte une portion d'extension avant (54) connectée à la face arrière de ladite seconde barre d'armature (22) et maintenue proche de et en parallèle au sol.

6. La combinaison d'armature de véhicule (10) que revendiquée dans la revendication 1 comprenant encore un siège (30) disposé au sommet de ladite unité d'armature de base (20) pour supporter une personne.

7. La combinaison d'armature de véhicule (10) telle que revendiquée dans la revendication 6 dans laquelle ledit siège (30) est accouplé de façon détachable à ladite unité d'armature de base (20).

8. La combinaison d'armature de véhicule (10) que revendiquée dans la revendication 6 dans laquelle ledit siège (30) est formé d'une seule pièce avec une partie de ladite unité d'armature de base (20).

9. La combinaison d'armature de véhicule (10) telle que revendiquée dans la revendication 1 dans laquelle ladite unité d'armature de base (20) comprend encore deux couvercles (39) pour fermer sélectivement deux extrémités distantes de l'un desdits premiers trous (33) et desdits seconds trous (34) de ladite tête (31).
